(19) Europäisches Patentamt
European Patent Office
Office européen des brevets

(11) Publication number: 0 289 631 B1

# (12) EUROPEAN PATENT SPECIFICATION

(45) Date of publication of the patent specification: 19.09.90

(51) Int. Cl.$^5$: C07B 57/00, B01J 20/32 // C07C227/40

(21) Application number: 87106426.7

(22) Date of filing: 04.05.87

## (54) Filler for separating optical isomer.

(43) Date of publication of application: 09.11.88 Bulletin 88/45

(45) Publication of the grant of the patent: 19.09.90 Bulletin 90/38

(84) Designated Contracting States: BE CH FR GB IT LI NL

(56) References cited:
**JOURNAL OF THE AMERICAN CHEMICAL SOCIETY, vol. 101, no. 11, 23rd May 1979, pages 3035-3042, American Chemical Society; G. DOTSEVI et al.: "Host-guest complexation. 14. Host covalently bound to polystyrene resin for chromatographic resolution of enantiomers of amino acid and ester salts"nder phase-transfer conditions", Seite 515, Spalte 1, Zusammen 000**
**JOURNAL OF THE AMERICAN CHEMICAL SOCIETY, vol. 97, no. 5, 5th March 1975, pages 1259-1261; G. DOTSEVI et al.: "Chromatographic optical resolution through chiral complexation of amino ester salts by a host covalently bound to silica gel"**

(73) Proprietor: **Director-General of the Agency of Industrial Science and Technology, Ministry of International Trade & Industry 3-1 Kasumigaseki 1-chome, Chiyoda-ku Tokyo 100(JP)**

(72) Inventor: **Shinbo, Toshio, 1, Higashi-1-chome Yatabe-machi, Tsukuba-gun Ibaraki-ken 305(JP)**
Inventor: **Nishimura, Koichiro, 1, Higashi-1-chome Yatabe-machi, Tsukuba-gun Ibaraki-ken 305(JP)**
Inventor: **Yamaguchi, Tomohiko, 1, Higashi-1-chome Yatabe-machi, Tsukuba-gun Ibaraki-ken 305(JP)**
Inventor: **Sugiura, Masaaki, 1, Higashi-1-chome Yatabe-machi, Tsukuba-gun Ibaraki-ken 305(JP)**

(74) Representative: **Boeters, Hans Dietrich, Dr. et al, Boeters & Bauer Bereiteranger 15, D-8000 München 90(DE)**

EP 0 289 631 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a novel filler for separating an optical isomer, and more specifically it relates to a filler which is capable of separating optical isomers from one another by a column process.

For separating an optical isomer such as amino acid or the like, various methods are known in the art including a diastereomer forming process, a crystal inoculation process, an enzyme process, an isolation film process and a column process. Of such conventional methods, the column process is capable of carrying out optical resolution of optical isomers completely. The column process has another advantage that continuous operation is possible when it is combined with Sarex techniques. However, most of the optical resolution column processes which have been proposed for amino acid separation utilize a ligand exchange process as their resolution principle. Accordingly, it is required to use an eluent containing a metal ion such as a copper ion or the like, or to use an eluent containing an another optically active amino acid, if circumstances require. Thus these processes are unsuitable for resolution of an optical isomer.

On the other hand as the column process which does not utilize a ligand exchange principle there has been solely a process using a column filler obtained by chemical bonding (covalent bonding) polystyrene or silica gel with an optically active crown compound (J.Am.Chem.Soc., 97, 1259 (1975) and ibid., 101, 3035 (1979)). However, this process has disadvantages that not only the number of theoretical plates is small but the preparation of the filler is troublesome and requires high cost. Also, it has another disadvantage that an organic solvent must be used as an eluent, so that it may not be applied to an aqueous solution of the sample to be separated.

The present invention has been made in view of the foregoing disadvantages of the prior art.

Accordingly, it is an object of the present invention to provide a column filler which is useful for separating an optical isomer and is capable of being manufactured with ease and at a low cost.

It is another object of the present invention to provide a column filler which is suitable for separating an optical isomer by using pure water or volatile dilute acid as an eluent after an adsorption treatment, for example, so that an aqueous solution of amino acid may be used for separation.

Other and further objects, features and advantages of the invention will appear more fully from the following description.

In accordance with the present invention, there is provided a filler for separating an optical isomer comprising a surfacehydrophobic filler component and an optically active lipophilic crown compound carried on said filler component, characterized in that

– said lipophilic crown compound is represented by the following formula:

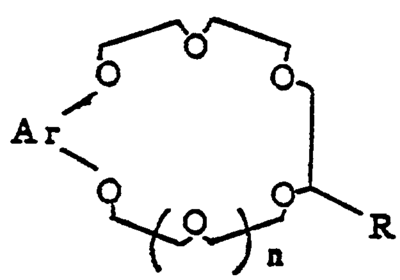

(I)

wherein Ar denotes an optically active divalent aromatic group represented by the following formula:

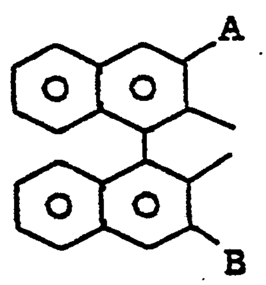

(II)

wherein A and B each denotes a hydrogen atom, an alkyl group (preferably having carbon atoms of 1 to 3, such as a methyl group) or an aryl group (such as a phenyl group), R denotes a hydrogen atom or an alkyl group (particularly, a long chain alkyl group having carbon atoms of about 6 to 16), and n is an integer of 1 or 2, and that

– said lipophilic crown compound is carried on said surface-hydrophobic filler component by adsorption.

The crown compound represented by the general formula (I) may be prepared by, for example, reacting an optically active aromatic derivative represented by the following general formula (III):

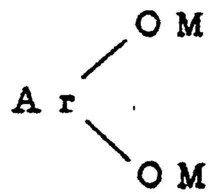

(III)

(wherein, Ar has the same meaning as described above and M is alkaline metal)

with an alkyl derivative of 1, ω-substituted penta- or hexaethylene glycol represented by the following general formula (IV):

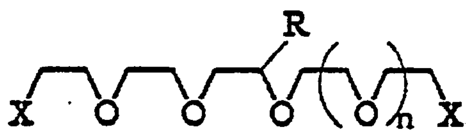

(IV)

(wherein, X denotes chlorine, iodine or a tosyloxy group, and R and n each has the same meaning as described above) in equimolar amounts in an organic solvent such as tetrahydrofuran, dioxan, N,N'-dimethylformamide or the like under an inert gas atmosphere.

The optically active crown compound which may be used in the present invention may be either a R-form optical isomer or a S-form one. When, for example, the R-form optical isomer is used, a column filler can be obtained by which a D-form isomer is eluted therefrom after the elution of a L-form isomer; whereas, when the S-form isomer is used, a column filler can be obtained by which the L-form isomer is eluted therefrom after the D-form one.

In the present invention, the filler component on which the optically active crown compound is adsoptively carried is a surface-hydrophobic one (reversed phase adsorbent). Such a surface-hydrophobic filler component may be prepared by modifying the surface of a filler material with a hydrophobic compound according to any suitable conventional method. In this case, the filler material may be selected from the group consisting of silica, alumina, magnesia, silica-alumina and the like. The hydrophobic compound may be selected from the group consisting of a compound having any one of hydrocarbon chains including a lower or higher alkyl group, which is preferably an alkyl group having 8~18 carbon atoms, such as octyl, dodecyl and octadecyl, (although a lower alkyl group having 1~5 carbon atoms, such as metyl, propyl and butyl group and a alkyl group having over 18 carbon atoms may also be used) an aryl group such as phenyl or an alkylphenyl group, and a compound having a haloalkyl group containing fluorine or chlorine. Modification of the surface of filler material with the hydrophobic compound may be carried out according to any suitable conventional process such as physical adsorption, chemical bonding or the like, although it is not limited to such a process. Also, in the present invention, any commercially available inorganic or organic surface-hydrophobic filler material may be used as the surface-hydrophobic filler component without any modification.

The optical isomer separating filler according to the present invention is prepared by carrying the optically active lipophilic crown compound on the surface-hydrophobic filler component by physical adsorption. The amount of the crown compound adsorptively carried on the surface-hydrophobic filler component is not limited to any specific range. However, in order to accomplish satisfactory separation, it is preferably $10^{-5}$moℓ or more per 1 mℓ of the surface-hydrophobic filler component. The upper amount is not limited. However, it is preferably up to $10^{-3}$moℓ per 1 mℓ of the surface-hydrophobic filler component.

The adsorptive carrying of the crown compound on the filler component is preferably practiced according to the following procedures. More particularly, the surface-hydrophobic filler component is charged in a column and then a solution of a optically active fat-soluble crown compound in a mixed solvent consisting of an organic solvent and water of a fixed composition is circulated through the column by means of a pump. In this process, as the adsorptive carrying of the crown compound on the surface-hydrophobic filler component proceeds, the concentration of the crown compound in the circulated solution decreases. Accordingly, it is required to add additional water to the solution in a predetermined time to decrease solubility of the crown compound in the circulated solution and to re-circulate it through the column. Such procedures are repeated to obtain the filler of the present invention which comprises the surface-hydrophobic filler component and the crown compound adsorbed thereon. The organic solvent described above may be selected from the group consisting of alcohols such as methanol, ethanol, propanol, acetonitrile and tetrahydrofuran.

A column charged with the filler of the present invention may be used for separation of various optical isomers. For example, it is conveniently used for optical resolution of an amino compound such as an amino acid, amine or the like. It is more conveniently used for optical resolution of a compound in which an amino group is bonded to asymmetric carbon, particularly for optical resolution of a racemic phenylglycine, methionine, leucine, glutamic acid, phenylalanine, cysteine, tyrosine, alanine, phenylethyl amine or

the like. Also, a column charged with the filler of the present invention is applied to separation of an optically active organic ion by utilizing the mutual action of the ions.

As an eluent for the column charged with the filler of the present invention are used pure water and diluted aqueous solutions of a salt or an acid. The diluted acid solution is preferably used because of exhibiting an increased separating effect.

EXAMPLES

Example 1

A: Column for separation of optical isomer

An optically active R-form crown compound represented by the above-described general formula (I) wherein Ar is 3,3′-diphenyl-1,1′-binaphthyl-2,2′-diyl, R is H and n is 1 was dissolved in amounts of 58mg in about 80% aqueous methanol solution, and then the solution was circulated for 24 hours through a column (ODS column) (diameter: 4mm, length: 125mm) charged with a surface-hydrophobic filler component comprising a commercially available octadecylsilica (ODS) (particle diameter: 5μm) by means of a pump. During this circulation, water was added in order to gradually decrease the content of methanol in the circulated solution, resulting in the circulated solution finally containing about 40% methanol. This caused the crown compound to be substantially completely adsorbed on the ODS charged in the column. The amount of the crown compound on the ODS was $5.8 \times 10^{-5}$moℓ/mℓ of ODS.

B: Separation of optical isomer

A high-performance liquid chromatography apparatus equipped with a DIP-1 type pump manufactured by Nippon Bunko Co., an S-3101A type UV detector manufactured by Sohma Kohgaku Co. and a Rheodyne sample injector was connected to the optical isomer separating column prepared by the above described procedure and was used to carry out separation of various racemic amino acids and amines. The results are shown in Table 1.

In the separation process, $10^{-2}$M $HC\ell O_4$ was used as an eluent and the process was carried out at temperatures of 18°C and 2°C. The amount of each sample was $10^{-8}$moℓ. Detection of the amino compound was done by measuring UV adsorption of 200nm or 254nm.

Table 1

(Optical resolution of racemic body)

| Amino Compound | 18°C | | | 2°C | | |
|---|---|---|---|---|---|---|
| | Capacity factor | | Separation ratio α | Capacity factor | | Separation ratio α |
| | L-form | D-form | | L-form | D-form | |
| Alanine | 0.24 | 0.48 | 2.02 | 0.37 | 0.16 | 2.72 |
| Valine | 0.89 | 1.01 | 1.14 | 1.06 | 1.31 | 1.24 |
| Leucine | 3.11 | 5.14 | 1.65 | 3.82 | 8.37 | 2.19 |
| Isoleucine | 2.59 | 2.87 | 1.11 | 2.82 | 3.70 | 1.31 |
| Allo-isoleucine | 2.35 | 2.60 | 1.10 | 2.75 | 3.20 | 1.16 |
| Phenylglycine | 2.00 | 9.17 | 4.58 | 2.83 | 25.71 | 9.07 |
| Phenylalanine | 9.25 | 11.50 | 1.24 | 14.27 | 19.87 | 1.39 |
| Methionine | 1.77 | 3.65 | 2.06 | 2.73 | 8.27 | 3.03 |
| Cysteine | 0.24 | 0.43 | 1.81 | 0.34 | 0.89 | 2.60 |
| Tyrosine | 7.11 | 8.61 | 1.21 | 15.88 | 20.77 | 1.31 |
| Aspartic acid | 0.14 | 0.28 | 2.07 | 0.32 | 0.70 | 2.18 |
| Glutamic acid | 0.32 | 1.18 | 3.73 | 0.58 | 3.54 | 6.08 |
| Lysine | 0.51 | 0.63 | 1.22 | 1.38 | 1.85 | 1.35 |
| Arginine | 0.36 | 0.62 | 1.75 | 0.67 | 1.88 | 2.82 |
| Threonine | 0.16 | 0.24 | 1.50 | 0.21 | 0.47 | 2.24 |
| Phenylethylamine | 10.36 | 6.50 | 0.63 | 25.05 | 18.05 | 0.72 |

As can seen from Table 1, L-form was eluted in advance to D-form in each case of amino acids, whereas D-form was eluted in advance to L-form in the case of phenylethylamine. The separation ratio was increased or improved by lowering the column temperature. At the column temperature of 2°C, 14 amino acids, i,e., alanine, leucine, isoleucine, allo-isoleucine, gultamic acid, phenylalanine, methionine, threonine, valine, tyrocine, cysteine, lysine, arginine and phenylglycine were completely separated into respective enantiomers. In particular, the separation ratio of phenylglycine was reached to a level as high as 9.

Commercially available DL-isoleucine is generally a mixture of four stereoisomers, i.e., D-, L-, D-allo- and L-allo-forms. It was found that these isomers can be separated from one another by the column using the column filler of the present invention. That is, the four form isomers were separated into three peaks of L-form+L-allo-form, D-allo-form and D-form peaks. The column filler used in this case was that having an R-form crown compound absorbed therein. However, by using a column filler having an S-form crown compound adsorbed therein as used in Example 2 described herienafter, the L-form+L-allo-form mixed isomer was separated into two isomer components completely.

The separating effects of different eluents are shown in Table 2. Methionine of $10^{-7}$moℓ was used as a sample to be separated and the column temperature was set at 18°C. When using aqueous solution of perchloric acid ($HC\ell O_4$) as eluent, retention time of methionine was gradually shortened as the concentration of the eluent decreased, so that methionine was eluted earlier by earlier. In regard to other dilute acid solutions, like phenomena occur when a more hydrophilic acid is used. However, the separation ratio was substantially unvaried throughout the experiments. In particular, the fact that the optical resolution was possible even when pure water was used as an eluent proves that the resolution can be highly conveniently carried out.

Table 2

(Effect of eluent on optical resolution of methionine)

| Column parameter Eluent | Capacity factor | | Separation ratio α |
|---|---|---|---|
| | L-form | D-form | |
| Water | 0.74 | 1.28 | 1.73 |
| $3\times10^{-5}$M $HC\ell O_4$ | 0.98 | 1.76 | 1.80 |
| $10^{-4}$M $HC\ell O_4$ | 0.99 | 1.81 | 1.83 |
| $3\times10^{-4}$M $HC\ell O_4$ | 1.05 | 1.91 | 1.83 |
| $10^{-3}$M $HC\ell O_4$ | 1.10 | 2.08 | 1.89 |
| $3\times10^{-2}$M $HC\ell O_4$ | 1.28 | 2.51 | 1.96 |
| $10^{-2}$M $HC\ell O_4$ | 1.75 | 3.62 | 2.07 |
| $10^{-2}$M $HNO_3$ | 1.23 | 2.41 | 1.96 |
| $10^{-2}$M $HC\ell$ | 1.16 | 2.28 | 1.96 |
| $10^{-2}$N $H_2SO_4$ | 1.02 | 2.00 | 1.96 |

Example 2

Example 1 was substantially repeated to obtain an ODS column except that 39mg of an optically active S-form crown compound of the above-described general formula (I) wherein Ar is 3,3′-diphenyl-1,1′-binaphtyl-2,2′-diyl, R is H and n is 1 was used. The amount of the crown compound carried on a surface-hydrophobic filler component was 3.9 x $10^{-5}$moℓ/mℓ. Amino acids were subjected to an optical resolution treatment using this modified ODS column. The results are shown in Table 3. The column temperature was 2°C, $10^{-2}$M $HC\ell O_4$ was used as an eluent, and each of the samples was used in an amount of $10^{-8}$moℓ.

In this Example 2, D-form amino acid was eluted in advance to L-form amino acid, as different from in Example 1.

The separation ratio (α) of each sample was decreased as compared to in Example 1, because of decreasing the amount of the crown compound adsorbed on ODS.

Table 3

(Optical resolution of amino acid when S-type crown compound is used)

| Column parameter Amino acid | Capacity factor | | Separation ratio α |
|---|---|---|---|
| | D-form | L-form | |
| Alanine | 0.25 | 0.44 | 1.77 |
| Leucine | 4.04 | 5.94 | 1.47 |
| Phenylglycine | 2.33 | 8.81 | 3.78 |
| Phenylalanine | 12.41 | 14.60 | 1.18 |
| Methionine | 2.12 | 3.82 | 1.80 |
| Tyrocine | 9.73 | 11.16 | 1.15 |
| Glutamic acid | 0.34 | 1.03 | 3.03 |

Example 3

An optically active R-form crown compound of the above-described general formula (I) wherein Ar is 3,3'-diphenyl-1,1'-binaphtyl-2,2'-diyl, R is $C_{14}H_{29}$, and n is 1 was dissolved in amounts of 58mg in about 90% methanol solution in water to obtain its solution, as similar to Example 1. A ratio of water in the solution was gradually increased to cause the methanol content to be finally about 70%, so that the crown compound was adsorbed in an ODS column (diameter; 4mm, length: 125mm). The amount of the crown compound adsorbed was $4.4 \times 10^{-5}$moℓ/mℓ. Results of separation of various racemic amino acids to each optical isomer which was carried out using this column are shown in Table 4. A column temperature was 2°C, $10^{-2}$M $HC\ell O_4$ was used as an eluent, and the amount of each sample was $10^{-7}$moℓ. In this Example, L-form amino acid was eluted in advance to D-form amino acid, as same as in the above-described Example 1, and the separation of the D-form amino acid from the L-form amino acid was carried out. Also, satisfactory determination analysis of amino acid was carried out. A peak area in chromatogram was linearly increased with an increase in amino acid concentration, and an error in the measurement was within 1%. Table 5 shows temperature dependency of a DL separation ratio (α) obtained using phenylglycine. The separation ratio (α) was increased with lowering of the column temperature, as same as in Example 1.

Table 4

(DL separation ratio of amino acid)

| Column parameter Amino acid | Capacity factor | | Separation ratio α |
|---|---|---|---|
| | L-form | D-form | |
| Alanine | 0.21 | 0.35 | 1.70 |
| Valine | 1.13 | 1.20 | 1.07 |
| Leucine | 3.11 | 5.19 | 1.67 |
| Methionine | 1.94 | 3.78 | 1.95 |
| Isoleucine | 3.07 | 3.57 | 1.16 |
| Phenylalanine | 13.17 | 15.67 | 1.19 |
| Phenylglycine | 2.00 | 7.73 | 3.87 |

Table 5

(Temperature dependency of DL separation ratio of phenylglycine)

| Column parameter Temperature (°C) | Capacity factor | | Separation ratio α |
|---|---|---|---|
| | L-form | D-form | |
| 2 | 2.00 | 7.73 | 3.87 |
| 6 | 1.77 | 5.97 | 3.37 |
| 10 | 1.75 | 4.94 | 2.81 |
| 14 | 1.57 | 3.92 | 2.49 |
| 18 | 1.51 | 3.37 | 2.23 |
| 22 | 1.42 | 2.83 | 2.00 |
| 26 | 1.34 | 2.45 | 1.82 |
| 30 | 1.27 | 2.16 | 1.69 |
| 34 | 1.21 | 1.91 | 1.59 |

As can be seen from the foregoing each Example, the filler of the present invention is manufactured with ease and a a low cost and is highly suitable for separation of an optical isomer.

A column charged with the filler of the present invention allows to use pure water and dilute acid as an eluent, so that an amino acid solution to be subjected to separation may be prepared in the form of an aqueous solution. Also, the filler of the present invention can be used not only in a small-sized column for chemical analysis but in a large-sized one for industrial processing.

## Claims

1. A filler for separating an optical isomer comprising a surface-hydrophobic filler component and an optically active lipophilic crown compound carried on said filler component, characterized in that
– said lipophilic crown compound is represented by the following formula:

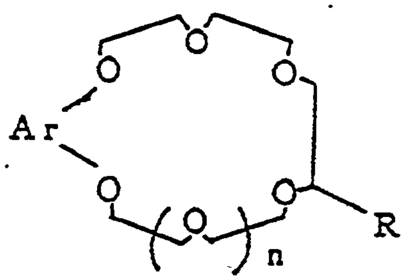

wherein Ar denotes an optically active divalent aromatic group represented by the following formula:

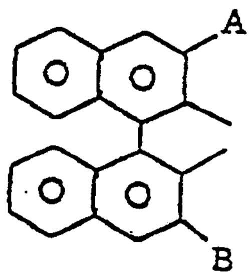

wherein A and B each denotes a hydrogen atom, an alkyl group or an aryl group, R denotes a hydrogen atom or an alkyl group, and n is an integer of 1 or 2, and that
– said lipophilic crown compound is carried on said surface-hydrophobic filler component by adsorption.

2. A filler for separating optical isomer as defined in Claim 1, wherein said surface-hydrophobic filler component comprises a filler material of which a surface is modified with a hydrophobic compound.

3. A filler for separating optical isomer as defined in Claim 1, wherein the amount of said optically active crown compound carried on said surface-hydrophobic filler component is $10^{-5}$ mol or more per 1 ml of said filler component.

**Patentansprüche**

1. Füllmittel zum Abtrennen eines optischen Isomeren mit einer an ihrer Oberfläche hydrophoben Füllmittelkomponente und einer optisch aktiven lipophilen Kronenverbindung, die von der Füllmittelkomponente getragen wird, dadurch gekennzeichnet,
– daß die lipophile Kronenverbindung durch die folgende Formel wiedergegeben wird:

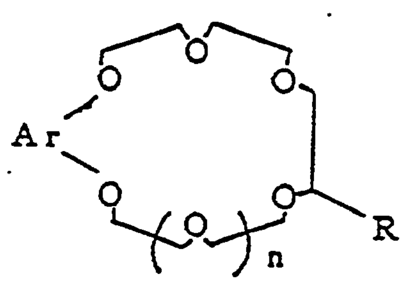

in der Ar eine optisch aktive zweiwertige aromatische Gruppe der folgenden Formel bedeutet:

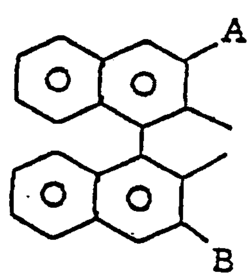

in der A und B jeweils ein Wasserstoffatom, eine Alkylgruppe oder eine Arylgruppe bedeuten, R ein Wasserstoffatom oder eine Alkylgruppe bedeutet und n eine ganze Zahl von 1 bis 2 ist, und – daß die lipophile Kronenverbindung auf der an ihrer Oberfläche hydrophoben Füllmittelkomponente durch Adsorption getragen wird.

2. Füllmittel zum Abtrennen eines optischen Isomeren nach Anspruch 1, bei dem die an ihrer Oberfläche hydrophobe Füllmittelkomponente ein Füllmittelmaterial umfaßt, dessen Oberfläche mit einer hydrophoben Verbindung modifiziert worden ist.

3. Füllmittel zum Abtrennen eines optischen Isomeren nach Anspruch 1, bei dem die Menge der optisch aktiven Kronenverbindung auf der in ihrer Oberfläche hydrophoben Füllmittelkomponente $10^{-5}$ mol oder mehr je 1 ml der Füllmittelkomponente beträgt.

**Revendications**

1. Remplissage pour la séparation d'un isomère optique comprenant un constituant de remplissage hydrophobe en surface et un composé couronne lipophile optiquement actif porté sur ledit constituant de remplissage, caractérisé en ce que:

– ledit composé couronne lipophile est représenté par la formule suivante:

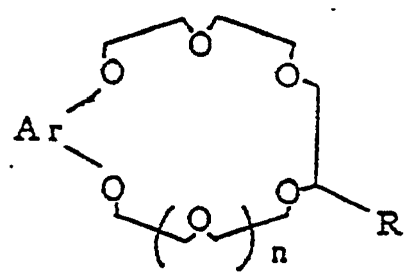

dans laquelle Ar indique un groupe aromatique divalent optiquement actif représenté par la formule suivante:

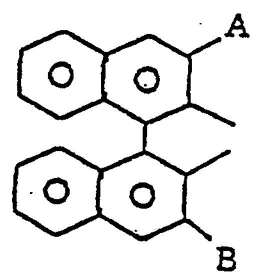

dans laquelle A et B indiquent chacun un atome d'hydrogène, un groupe alkyle ou un groupe aryle, R indique un atome d'hydrogène ou un groupe alkyle, et n est un nombre entier de 1 ou 2, et en ce que:

– ledit composé couronne lipophile est supporté par ledit constituant de remplissage hydrophobe en surface par adsorption.

2. Remplissage pour la séparation d'isomère optique selon la revendication 1, dans lequel ledit constituant de remplissage hydrophobe en surface comprend un matériau de remplissage dont une surface est modifiée avec un composé hydrophobe.

3. Remplissage pour la séparation d'isomère optique selon la revendication 1, dans lequel la quantité dudit composé couronne optiquement actif porté sur ledit constituant de remplissage hydrophobe en surface est $10^{-5}$ mole ou plus par millilitre dudit constituant de remplissage.